# EUROPÄISCHE PATENTSCHRIFT

(11) **EP 1 242 159 B1**
(45) Veröffentlichungstag und Bekanntmachung des Hinweises auf die Patenterteilung: **14.05.2003**
(21) Anmeldenummer: 00989988.1
(22) Anmeldetag: 18.12.2000
(51) Int. Cl.: B01D 37/04, B01F 15/04, B01F 3/12, B01D 37/02

(54) **VERFAHREN UND VORRICHTUNG ZUR ZUFÜHRUNG VON FILTERHILFSMITTELN UND/ODER TECHNISCHEN HILFSSTOFFEN WÄHREND DER FILTRATION**
METHOD AND DEVICE FOR SUPPLYING FILTERING AIDS AND/OR PROCESS MATERIALS DURING FILTRATION
PROCEDE ET DISPOSITIF POUR AMENER DES AGENTS AUXILIAIRES DE FILTRATION ET/OU DES SUBSTANCES AUXILIAIRES TECHNIQUES PENDANT LA FILTRATION

(30) Priorität: 28.12.1999 DE 19963421
(43) Veröffentlichungstag der Anmeldung: 25.09.2002
(73) Patentinhaber: Seitz-Schenk Filtersystems GmbH, 55543 Bad Kreuznach (DE)
(72) Erfinder: BALLREICH, Günter, 72636 Frickenhausen (DE); LASSAK, Raimund, 55545 Bad Kreuznach (DE); RASMUSSEN, Peter, DK-7000 Fredericia (DK)
(74) Vertreter: Riedel, Peter
(86) Internationale Anmeldenummer: EP0012879
(87) Internationale Veröffentlichungsnummer: WO01047616

(56) Entgegenhaltungen:
- EP-A- 0 150 626
- EP-A- 0 460 214
- WO-A-99/29396
- NL-A- 6 812 474
- NL-A- 6 813 835
- US-A- 5 913 602

## Beschreibung

Die Erfindung betrifft ein Verfahren zur Zuführung von Filterhilfsmitteln und/oder technischen Hilfsstoffen während der Filtration sowie eine Vorrichtung zur Durchführung eines solchen Verfahrens.

Filterhilfsmittel und andere technische Hilfsstoffe werden in vielen Prozessen bei der Filtration eingesetzt, insbesondere in der Getränkeindustrie zur Filtration (Abtrennung von festen Stoffen sowie Kolloiden aus Flüssigkeiten). Bei bekannten Filteranlagen werden häufig die Filterhilfsmittel und technischen Hilfsstoffe in dafür vorgesehenen Vorratsbehältern bereitgehalten und bedarfsweise aus diesen entnommen. Die Filterhilfsmittel wie beispielsweise Kieselgur und die anderen technischen Hilfsstoffe werden in Säcken angeliefert, die geöffnet und dann in die Vorratsbehälter entleert werden. Für die Sackentleerung ist eine aufwendige Anlage erforderlich, und zwar sowohl hinsichtlich des öffnens der Säcke des Umfüllens sowie der erforderlichen Staubabsaugung. Das Filterhilfsmittel wird in großen Behältern mit einer Flüssigkeit angesetzt, um eine entsprechende Suspension zu bilden, die in dem Dosierbehälter bereitgehalten wird und dem Filter zuführbar ist. Da die Suspension ständig dem Unfiltrat vor dem Filter zugeführt wird, muß eine große Ansatzmenge der Suspension bereitgestellt oder ständig angesetzt werden.

Die Menge an Filterhilfsmitteln und/oder technischen Hilfsstoffen kann somit lediglich über die Dosierung der Wassermenge, die als Suspension dem Filter zugeführt wird, beeinflußt werden. Durch diese Veränderung der Dosagemenge erfolgt eine Rückverdünnung und somit z.B. beim Bier auch eine Veränderung des Stammwürzgehaltes, was somit zu unterschiedlichen Bierqualitäten führt. Da die Suspension in ihrer Zusammensetzung als fertige Mischung vorliegt, können die einzelnen Komponenten nicht mehr variiert werden, so daß auf Änderungen bei der Filtrierbarkeit, höhere Trubbelastung usw. (Messung der Filtrationsdaten) nicht gezielt und vor allem nicht rasch reagiert werden kann.

Der vorliegenden Erfindung liegt daher die Aufgabe zugrunde, ein Verfahren zur Zuführung von Filterhilfsmitteln und/oder technischen Hilfsstoffen während der Filtration zu schaffen, das leichter durchführbar ist. Außerdem besteht die Aufgabe darin, eine Vorrichtung zu schaffen, die kostengünstiger ist.

Diese Aufgabe wird durch ein Verfahren mit den Merkmalen des Anspruchs 1 sowie durch eine Vorrichtung mit den Merkmalen des Anspruchs 5 gelöst.

Das erfindungsgemäße Verfahren ermöglicht es, je nach Bedarf aus einem oder mehreren Vorratsbehältern die entsprechende Menge von Filterhilfsmitteln und/oder Hilfsstoffen zu entnehmen, trocken zu mischen oder zu suspendieren und dann direkt dem Unfiltratsstrom oder über Dosierstationen zuzugeben. Die aus den Vorratsbehältern entnommenen Mengen (trocken oder flüssig) werden in einem mit einer Mischvorrichtung versehenen Behälter suspendiert oder trocken gemischt und dann mit gleichbleibendem Volumenstrom zudosiert. Es kann auch ein einziger Vorratsbehälter, in dem bereits eine Mischung von Filterhilfsmitteln und/oder technischen Hilfsstoffen enthalten ist, vorgesehen sein. Um bei gleichzeitiger Entnahme aus verschiedenen Vorratsbehältern eine gute Durchmischung der jeweiligen Komponenten zu erreichen, ist in dem Mischbehälter ein Rührwerk vorgesehen.

Von Vorteil ist auch, daß die Filterhilfsmittel und/oder technischen Hilfsstoffe in Abhängigkeit von den erfaßten Filtrationsdaten erst kurz vor Zugabe zum Unfiltrat in Menge und Mischung zusammengestellt werden. Auf diese Weise ist es möglich, gleichzeitig mit festen Zugabemengen (Stabilisierungsmitteln) sowie mit variablen Mengen der Filterhilfsmittel und/oder technischen Hilfsstoffe während der Filtration zu reagieren. Als Filtrationsdaten, in deren Abhängigkeit die Dosierung erfolgen soll und die zur Berechnung der Filterhilfsmittelzugabe zugrunde gelegt werden, sind vor allem die Filtrierbarkeit (Esser-Test), die Trubbelastung (Unfiltratstrübung, Hefen usw.), der Filtrationsdifferenzdruck sowie die erzielten Trübungswerte heranzuziehen und manuell oder automatisch zu erfassen.

Sofern ein Behälter zur Erzeugung einer Suspension angeordnet wird, so kann dieser wesentlich geringer ausgeführt werden als bei den bekannten Vorrichtungen der Ansatzbehälter, in dem eine beträchtliche Menge der Suspension bereitgehalten werden mußte. Die nunmehr erforderlichen Behälter haben ein Volumen, das lediglich ca. 0,5% bis max. 10% der bisher üblichen Ansatzbehälter beträgt.

Besonders zu erwähnen ist der Vorteil, daß bei dem erfindungsgemäßen Verfahren die Flüssigkeits- bzw. Wassermenge, die dem Produktstrom bzw. Filter zugeführt wird, stets konstant gehalten wird, wodurch auch beispielsweise beim Bier die Stammwürze konstant bleibt, was letztendlich zu einer gleichbleibenden Qualität des Erzeugnisses führt. Damit die Konzentration der Suspension möglichst ausschließlich von der jeweiligen Entnahmemenge der einzelnen Vorratsbehälter abhängig ist und nicht von der Flüssigkeitsmenge im Behälter, ist es zweckmäßig, an dem Behälter einen Sensor für den maximalen Füllstand vorzusehen, der in Abhängigkeit mit einem in einer Flüssigkeitszuführleitung angeordneten Ventil dafür sorgt, daß eine aus dem Behälter entnommene Suspensionsmenge durch einen entsprechenden Zulauf von Flüssigkeit kompensiert wird. Zur dosierten Entnahme der jeweiligen Suspensionen oder der Trockenmischung werden die Filterhilfsmittel und/oder technischen Hilfsstoffe aus den Vorratsbehältern über Zuläufe (z.B. mengengesteuerte Förderschnecken) trocken oder in flüssiger Form kontinuierlich zugegeben. Als Mittel zur dosierten Entnahme werden vorzugsweise handelsübliche Dosierpumpen eingesetzt.

Ausführungsbeispiele der Erfindung sind nachstehend anhand der Zeichnung näher erläutert. In der Zeichnung zeigt:
- Fig. 1: eine schematische Darstellung einer Vorrichtung mit mehreren Vorratsbehältern und einem Mischbehälter, aus dem die Filterhilfsmittel und technischen Hilfsstoffe einer Produktleitung oder einer vorhandenen Dosiereinrichtung zugeführt werden,
- Fig. 2: eine Ausführungsvariante der Vorrichtung mit Mitteln zur Erzeugung einer Suspension, welche die suspendierte Mischung der Filterhilfsmittel und/oder technischen Hilfsstoffe einer vorhandenen Dosierstation zuführt,
- Fig. 3: eine Draufsicht auf Entnahmevorrichtungen für die Vorratsbehälter und Anordnung des Mischbehälters, wobei die Vorrichtung für drei Vorratsbehälter ausgerüstet ist,
- Fig. 4: eine Anordnung gemäß Fig. 3 für vier Vorratsbehälter.

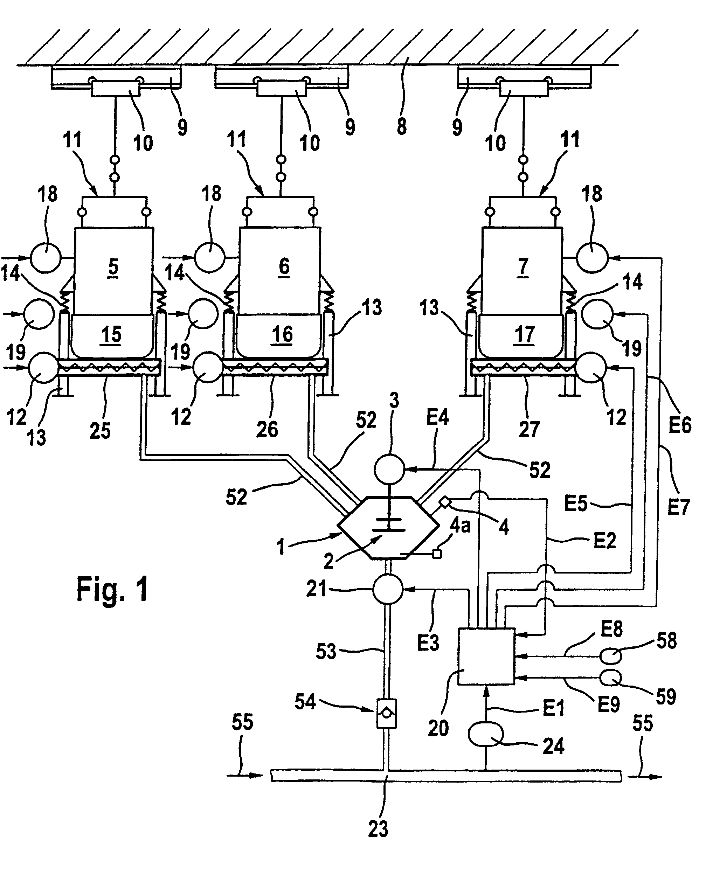

Die Vorrichtung in Fig. 1, die sich insbesondere für die Filtrierung von Bier eignet, umfaßt drei Vorratsbehälter 5, 6, 7 in Form von Containern, Tanks, Big Bags oder dergleichen. Am Beispiel der Ausführung mit Big Bags als Vorratsbehälter 5, 6, 7 ist gezeigt, daß diese jeweils mittels eines Hebegeschirrs 11 an einer Aufhängevorrichtung 10 (Ketten, Flaschenzug usw.) zur Lastaufnahme aufgehängt sind und mit ihrem unteren zu öffnenden Ende in Behälteraufnahmen 15, 16, 17 aufgenommen sind. Die Aufhängevorrichtungen 10 sind an einer oder mehreren Schienen 9 zum Wechseln der Behälter verschiebbar gelagert, wobei diese Schienen 9 wiederum an der Gebäudedecke befestigt sind. Im Bereich der Vorratsbehälter 5, 6, 7 sind jeweils ein Motor 18 und ein weiterer Elektromotor 19 vorgesehen. An der Unterseite der Behälteraufnahme 15, 16, 17 befindet sich jeweils eine Dosierschnecke 25, 26, 27, die zur Entnahme des in den Vorratsbehältern 5, 6, 7 enthaltenen Filterhilfsmittels oder technischen Hilfsstoffen dienen. Für jede der Dosierschnecken 25, 26, 27 ist ein Elektromotor 12 als Schneckenantrieb vorgesehen, wobei es sich vorzugsweise um frequenzgesteuerte elektrische Antriebe handelt. Um die Vorratsbehälter 5, 6, 7 von Schwingungskräften weitgehend zu entlasten, sind die Big Bags über Dämpfungseinrichtungen 14 auf Stützen 13 abgestützt.

An den austragsseitigen Enden der Förderschnecken 25, 26, 27 ist jeweils eine Zuführleitung 52 angeschlossen, wobei diese Zuführleitungen 52 zu einem Mischbehälter 1 führen, in den diese Zuführleitungen münden. In dem Mischbehälter 1 befindet sich ein Rührwerk 2, das mit einem Rührwerksmotor 3 gekoppelt ist. Am Mischbehälter 1 ist sowohl eine Füllstandssonde 4 als auch eine Leermeldesonde 4a vorgesehen. Ausgangsseitig des Mischbehälters 1 befindet sich ein Fördergerät 21, an das eine Dosierleitung 53 angeschlossen ist. In dieser Dosierleitung 53 befindet sich ein Rückschlagventil 54, durch das verhindert wird, daß Flüssigkeit aus einer Ulfiltratleitung 23, in die die Dosierleitung 53 mündet, in Richtung auf das Fördergerät 21 zurückströmt.

An der Unfiltratleitung 23 ist die Durchströmungsrichtung des Produktes (Unfiltrat) mit den Pfeilen 55 angegeben. Abströmseitig der Einmündung der Dosierleitung 53 in die Unfiltratleitung 23 befindet sich ein Sensor 24, der eine oder mehrere Filtrationsdaten erfaßt. Der Sensor 24 ist über eine elektrische Verbindungsleitung E1 mit einem Steuergerät 20 verbunden. über eine elektrische Verbindungsleitung E2 ist die Füllstandsonde 4 an der Steuergerät 20 angeschlossen. Ferner sind Sensoren 58 und 59 im Bereich eines nicht dargestellten Filters oder den Produktleitungen (Unfiltrat oder Filtrat) vorgesehen, die über elektrische Verbindungsleitungen E8 und E9 mit dem Steuergerät 20 verbunden sind. Diese Sensoren 58, 59 erfassen mehrere Filtrationsdaten, beispielsweise den Filtrationsdifferenzdruck sowie Trübungswerte. über elektrische Anschlußleitungen E3, E4, E5, E6 und E7 steht das Steuergerät 20 mit den elektrischen Antrieben des Fördergerätes 21, dem Rührwerksmotor 3, dem Schneckenantrieb 12 sowie den Elektromotoren 18 und 19 jeder der Vorratsbehälter 5, 6 und 7 in Verbindung.

Aufgrund der Labordaten und/oder der von Sensoren abgeleiteten Signale erfaßten Filtrationsdaten wird in dem Steuergerät 20 die jeweilige Menge der benötigten Filterhilfsmittel und/oder technischen Hilfsstoffe bestimmt. Durch entsprechende Signale werden über die elektrischen Verbindungsleitungen E5 zu jedem der Schneckenantriebe 12 der Förderschnecken 25, 26, 27 die entsprechenden Signale übermittelt, so daß die jeweils benötigte Menge der Filterhilfsmittel oder Hilfsstoffe aus den Vorratsbehältern 5, 6, 7 an der Behälteraufnahme 15, 16 und 17 abgenommen wird. Es erfolgt somit eine dosierte Entnahme der jeweils benötigten Filterhilfsmittel bzw. Hilfsstoffe aus den Big Bags.

Über die Zuführleitungen 52 gelangen diese Filtermittel in den Mischbehälter 1, wo diese mittels des Rührwerks 2 zu einem möglichst homogenen Gemisch gerührt werden. Dabei kann die Rührgeschwindigkeit ebenfalls durch das Steuergerät 20 bestimmt werden. Ebenfalls in Abhängigkeit von den im Steuergerät 20 festgelegten Werten wird das Fördergerät 21 angesteuert, so daß die Dosageleistung in Abhängigkeit des Produktvolumenstromes erfolgt. Durch die Dosierleitung 53 werden die Filterhilfsmittel und/oder technischen Hilfsstoffe unmittelbar der Unfiltratleitung 23 zugeführt und auf diese Weise dem Filter zugeleitet. Eine solche unmittelbare Zugabe von Filterhilfsmitteln in das Unfiltrat ohne vorherige Bildung einer Suspension wird beispielsweise bei der Produktion von Proteinen angewandt.

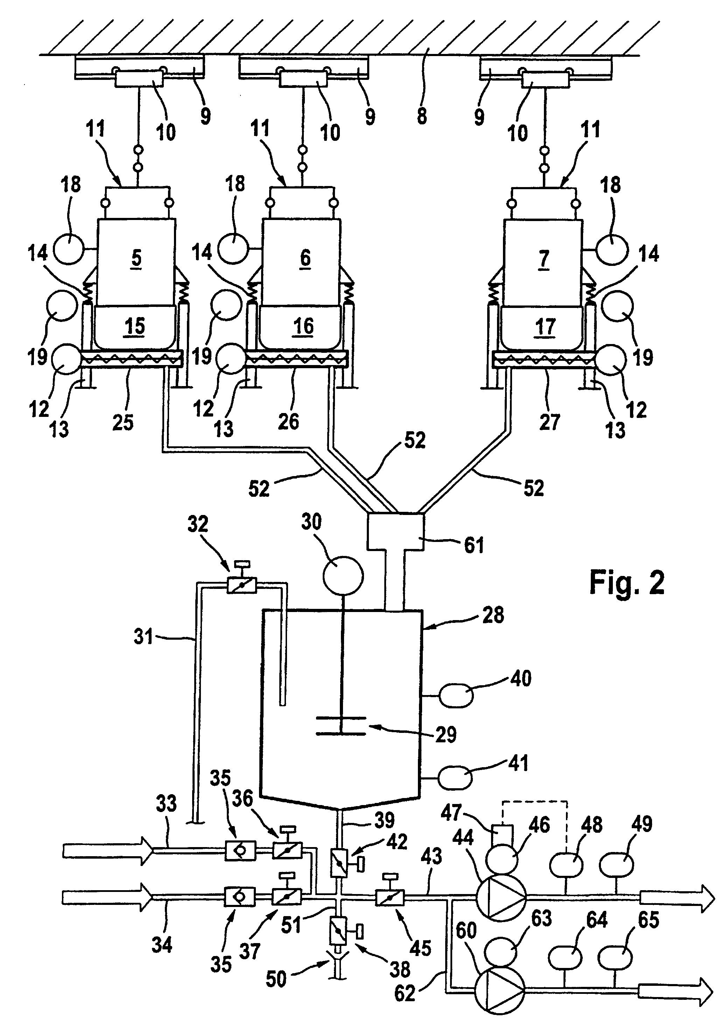

Die Fig. 2 zeigt eine ebenfalls drei Vorratsbehälter 5, 6, 7, die beispielsweise in Form von Big Bags ausgeführt sein können, umfassende Vorrichtung mit Aufhängungsvorrichtungen 10 und Behälteraufnahmen 15, 16, 17, die der Darstellung in Fig. 1 entsprechen. Ebenso sind die Dosierschnecken 25, 26, 27 mit den Schneckenantrieben 12 und den Zuführleitungen 52 auf die gleiche Weise ausgeführt. Aus Gründen der einfachen Darstellung wurde in Fig. 2 auf die Zuordnung des elektronischen Steuergerätes 20 und die jeweilige Verbindung mit den Sensoren und Antrieben verzichtet.

Im Gegensatz zu Fig. 1 führen in dem Ausführungsbeispiel der Fig. 2 die Zuführleitungen in einen Einwurf 61, der über einem Behälter 28 angeordnet ist. In diesem Behälter 28 ist ein Rührwerk 29 vorgesehen, das von einem Rührwerksmotor 30, der sich außerhalb des Behälters 28 befindet, angetrieben wird. In den Behälter 28 ist eine Flüssigkeitszuführleitung 31 geführt, die an einer Flüssigkeitsleitung 33 oder 34 angeschlossen und mit einem Ventil 32 versehen ist. Durch die Flüssigkeitszuführleitung 31 ist bei geöffnetem Ventil 32 Flüssigkeit in den Behälter 28 zuführbar. Der Behälter 28 umfaßt nahe seinem Boden einen Sensor 41, der dafür sorgt, daß ein minimales Volumen der Flüssigkeit in dem Behälter 28 nicht unterschritten wird. In einem oberen Bereich ist an dem Behälter 28 ein Sensor 40 für den maximalen Füllstand angeordnet, der bei Unterschreiten eines vorgegebenen Flüssigkeitsspiegels ein Signal gibt, durch das das Ventil 32 geöffnet wird und bei Erreichen eines vorgegebenen Füllstandes das Ventil 32 wieder schließt. Am Boden des Behälters 32 ist eine Behälterauslaßleitung 39 angeschlossen, in der ein Ventil 42 angeordnet ist und die in eine Suspensionsleitung 43 mündet.

Stromauf der Suspensionsleitung 43 sind die bereits genannten Flüssigkeitsleitungen 33, 34 mit jeweils Rückschlagventilen 35 sowie einem stellbaren Ventil 36, 37 versehen, bevor sich die Flüssigkeitsleitungen 33 und 34 zur Suspensionsleitung 43 vereinigen. In der Suspensionsleitung 43 ist stromab der Einmündung der Behälterauslaßleitung 39 ein einstellbares Ventil 45 vorgesehen und in Strömungsrichtung vor diesem Ventil 45 ist an der Suspensionsleitung 43 eine Abflußleitung 51 angeschlossen, die über ein Ventil 38 in einen Abfluß 50 freigebbar ist. Stromab des Ventils 45 ist in der Suspensionsleitung 43 eine Pumpe 44 angeordnet, deren Pumpenantrieb 46 von einem Drehzahlsteuergerät 47 beeinflußbar ist. Das Drehzahlsteuergerät 47 ist von mindestens einem Signal der Sensoren 48 und 49 beeinflußbar. Die Sensoren 48, 49 dienen zur Erfassung beispielsweise der Suspensionsströmung, der Suspensionstemperatur oder dergleichen. Für die Bestimmung der jeweiligen Mengen der Filterhilfsmittel und technischen Hilfsstoffe werden auch beim Ausführungsbeispiel der Fig. 2 weitere Filtrationsdaten einbezogen, wie dies zu Fig. 1 bereits angegeben ist.

Zwischen dem Ventil 45 und der Dosierpumpe 44 ist eine Zweigleitung 62 angeschlossen, in der eine Anschwemmpumpe 60 vorgesehen ist, welcher ein Antrieb 63 zugeordnet ist. An der Zweigleitung können Sensoren 64 und 65 angeordnet sein. Bei Filtrationsstillstand kann die Dosierleitung mit Kaltwasser durchgespült werden, um einer Verstopfungsgefahr zu begegnen. Ebenso wird am Ende der Filtration der Suspensionsbehälter 28, die Dosierpumpe 44 und die Dosierleitung mit Kalt- sowie mit Heißwasser gereinigt.

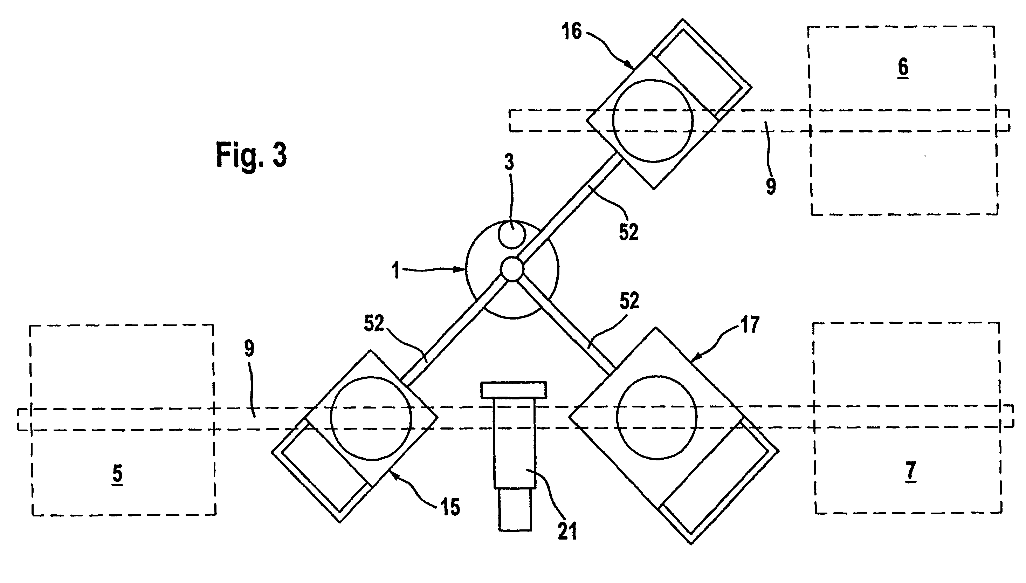

Die Fig. 3 zeigt die Draufsicht auf eine räumlich etwas anders zugeordnete Gruppe von Behälteraufnahmen 15, 16, 17, durch die auf engstem Raum eine möglichst einfach zu handhabende Ein- und Ausbringung von Big Bags 5, 6 und 7 möglich ist. Die als Big Bags vorgesehenen Vorratsbehälter 5, 6 und 7 sind in Fig. 3 gestrichelt in ihrer Position gezeigt, in der sie mit dem Hebegeschirr versehen und an der Aufhängevorrichtung befestigt werden. Mit gestrichelten Linien sind ebenfalls die an der Gebäudedecke befestigten Schienen 9 gezeigt. Die Behälteraufnahmen 15, 16, 17 sind derart angeordnet, daß sich die Behälteraufnahmen 15, 16 jeweils gegenüberliegend zu dem in der Mitte befindlichen Mischbebälter 1 befinden. In einem Sektor zwischen den Behälteraufnahmen 15, 16 befindet sich die dritte Behälteraufnahme 17, wobei der Mittelpunkt einer jeden Behälteraufnahme 15, 16, 17 mindestens annähernd unter einer der Schienen 9 liegt, so daß die Big Bags für die Entnahme möglichst vertikal aufgehängt sind.

Jede der Behälteraufnahme 15, 16, 17 ist über eine Zuführleitung 52 mit dem Mischbehälter 1 verbunden, wobei gemäß Darstellung in Fig. 3 alle diese Zuführleitungen 52 nahe dem Zentrum des Mischbehälters 1 in diesen münden. Mit dem Bezugszeichen 3 ist der auf dem Mischbehälter 1 befindliche Rührwerksmotor 3 bezeichnet. Die Vorratsbehälter 5, 6, 7 können von ihrer gestrichelt dargestellten Position mittels der in Fig. 1 und 2 dargestellten Aufhängevorrichtung 10 an den Schienen 9 in den Bereich über die Behälteraufnahmen 15, 16, 17 gefahren werden. Sodann werden die Big Bags an ihrer in die Behälteraufnahme 15, 16, 17 gerichteten Seite, das heißt unten geöffnet und in der Behälteraufnahme derart aufgenommen, daß eine staubfreie Entnahme mittels der unterhalb der Behälteraufnahmen angeordneten Förderschnecken möglich ist. In den verschiedenen Vorratsbehältern 5, 6, 7 bzw. Big Bags können verschiedene Filterhilfsmittel (grobe, mittlere und feine Kieselgur, Perliten usw.) Cellulosen (FH 1500, Fibroklar usw.) sowie Stabilisierungsmittel (PVPP fein, Silicagel sowie Kieselsol usw.) bereitgestellt werden. Dem Mischbehälter 1 ist ein Fördergerät 21 zugeordnet, die zur dosierten Entnahme der in dem Mischbehälter enthaltenen Mischung dient.

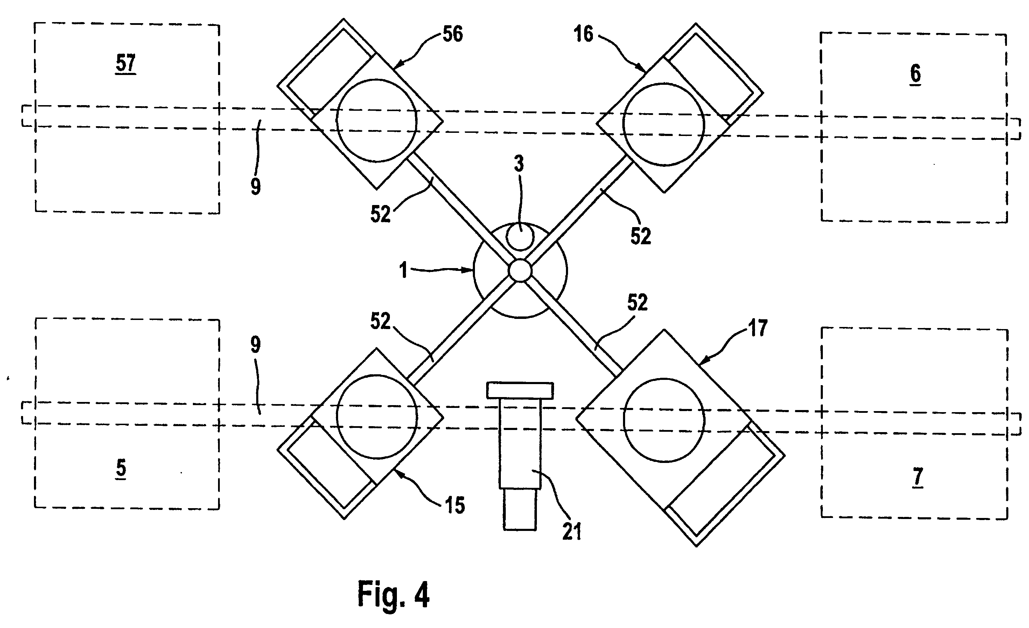

Die Fig. 4 zeigt eine Ausführungsvariante zu Fig. 3, bei der gegenüber der zuvor beschriebenen Fig. eine weitere Behälteraufnahme 56 für einen weiteren Big Bag 57 vorgesehen ist. Für diesen zusätzlichen Big Bag 57 ist die Schiene 9 im oberen Teil der Fig. 4 nach links verlängert, so daß auch die Behälterentnahme 56 mit ihrem Mittelpunkt unterhalb einer der Schienen 9 liegt. Im übrigen stimmen die weiteren Merkmale der Fig. 4 mit derjenigen der Fig. 3 überein, so daß die Bezugszeichen für gleiche Teile entsprechend übernommen wurden.

Wie sich aus der vorstehend beschriebenen Erfindung ergibt, erfolgt eine variable Mischung der Filterhilfsmittel oder anderer technischer Hilfsstoffe relativ kurz vor der Zudosage in den Produktstrom unmittelbar aus Big Bags oder ähnlichen Vorratsbehältern. Auf diese Weise ist ein staubfreies Einbringen der Substanzen möglich. Beim Ausführungsbeispiel der Fig. 2 erfolgt die Zugabe der Substanzen in einem kontinuierlich dem Produkt zulaufenden Wasserstrom. Die Einstellung der richtigen Filterhilfsmittelmischung bzw. Rezeptur erfolgt unter Verarbeitung von Filtrationsdaten, anhand denen die Anteile der jeweils benötigten Mengen der Substanzen bestimmt werden. Gemäß dem Ausführungsbeispiel der Fig. 1 können die trocken gemischten Substanzen auch unmittelbar in den Produktstrom geleitet werden.

Das erfindungsgemäße Zugabeverfahren während der Filtration kann für beliebige Anschwemmfiltrationen mit Dosage angewendet werden. Auch bestehende Anlagen können entsprechend nachgerüstet werden. Gegenüber den bekannten Einrichtungen und Verfahren ergibt sich bei gleichbleibenden Produktparametern eine schnellere und sicherere Anpassung der Dosage der Filterhilfsmittel und/oder technischen Hilfsstoffe, wodurch eine erhebliche Einsparung hinsichtlich Investition, Personal- und Betriebskosten sowie Arbeitsentlastung des Personals erreicht wird. Mit der erfindungsgemäßen Vorrichtung wird mit relativ geringem Investitionsaufwand auch ein hoher Automatisierungsgrad erreicht.

Die Erfindung ist mit einer beliebigen Zahl von Vorratsbehältern ausführbar, wobei in manchen Anwendungsfällen ein einziger Vorratsbehälter genügen kann. Es ist auch denkbar, in einen Vorratsbehälter bereits eine fertige Mischung von Filterhilfsmitteln bereitzuhalten und diese dosiert zu entnehmen.

## Patentansprüche

1. Verfahren zur Zuführung von Filterhilfsmitteln und/oder technischen Hilfsstoffen während der Filtration mit folgenden Verfahrensschritten:
- Erfassung von Filtrationsdaten an einem Filter oder aus einem Produktstrom vor und/oder nach dem Filter,
- Übermittlung der Filtrationsdaten an eine elektronische Steuereinheit (20),
- Berechnung der benötigten Menge der jeweiligen Filterhilfsmittel und/oder technischen Hilfsstoffe unter Berücksichtigung der Filtrationsdaten,
- dosierte Entnahme von trockenen Filterhilfsmitteln und/oder technischen Hilfsstoffen aus zumindest einem Vorratsbehälter (5, 6, 7, 57) aufgrund der berechneten Menge,
- Zuführen der dosierten Menge von Filterhilfsmitteln und/oder technischen Hilfsstoffen in einen Mischbehälter (19) oder einen Suspensionsbehälter (28),
- Mischen der Filterhilfsmittel und/oder technischen Hilfsstoffe in dem Mischbehälter (1) oder dem Suspensionsbehälter (28),
- dosierte kontinuierliche Entnahme der Filterhilfsmittel und/oder technischen Hilfsstoffe je nach Anwendung als Trockenmischung oder Suspension aus dem Mischbehälter (1) oder dem Suspensionsbehälter (28),
- kontinuierliche Zuleitung der dosierten Menge gemischter Filterhilfsmittel und/oder technischen Hilfsstoffe mit einem gleichbleibenden Volumenstrom in den Produktstrom (Unfiltrat).

2. Verfahren nach Anspruch 1,
**dadurch gekennzeichnet, daß** das Mischen der Filterhilfsmittel und/oder technischen Hilfsstoffe durch eine Mischvorrichtung (2) im Mischbehälter (1) oder eine Mischvorrichtung (29) im Suspensionsbehälter (28) erfolgt.

3. Verfahren nach einem der Ansprüche 1 oder 2,
**dadurch gekennzeichnet, daß** das Volumen der Suspension im Behälter (28) im wesentlichen konstant gehalten wird.

4. Verfahren nach einem der Ansprüche 1 bis 3,
**dadurch gekennzeichnet, daß** in einem Vorratsbehälter eine Mischung von Filterhilfsmitteln und/oder technischen Hilfsstoffen bereitgehalten wird und eine dosierte Entnahme der Mischung und trockene oder suspendierte Zuführung zu einem Produktstrom (Unfiltrat) erfolgt.

5. Verfahren nach Anspruch 1,
**dadurch gekennzeichnet, daß** eine dosierte Entnahme von trockenen Filterhilfsmitteln und/oder technischen Hilfsstoffen aus mehreren Vorratsbehältern (5, 6, 7, 57) erfolgt.

6. Vorrichtung zur Zuführung von Filterhilfsmitteln und/oder technischen Hilfsstoffen während der Filtration mit folgenden Merkmalen:
- Mindestens ein Vorratsbehälter (5, 6, 7,57), in dem die Filterhilfsmittel und/oder technischen Hilfsstoffe enthalten sind,
- Mittel (25, 26, 27) zur dosierten Entnahme aus den Vorratsbehältern (5, 6, 7, 57),
- einem Behälter (28) zur Suspendierung der dosiert entnommenen Filterhilfsmittel und/oder technischen Hilfsstoffe,
- Mittel (52, 61) zur Verbindung der Mittel (25, 26, 27) zur dosierten Entnahme mit dem Suspensionsbehälter (28),
- Mittel (42, 44) zur kontinuierlichen dosierten Entnahme eines gleichbleibenden Volumenstroms der Suspension aus dem Behälter (28),
- Mittel (48, 49, 58, 59) zur Erfassung aktueller Filtrationsdaten,
- einer elektronischen Steuereinheit (20), die mit den Mitteln (48, 49, 58, 59) zur Erfassung der Filtrationsdaten mit den Mitteln (25, 26, 27) zur dosierten Entnahme aus den Vorratsbehältern (5, 6, 7, 57) und mit den Mitteln (42, 44) zur dosierten Entnahme aus dem Behälter (28) verbunden ist.

7. Vorrichtung zur Zuführung von Filterhilfsmitteln und/oder technischen Hilfsstoffen während der Filtration mit folgenden Merkmalen:
- Mindestens einem Vorratsbehälter (5, 6, 7, 57), in dem die Filterhilfsmittel und/oder technische Hilfsstoffe enthalten sind,
- Mittel (25, 26, 27) zur dosierten Entnahme aus dem mindestens einen Vorratsbehälter (5, 6, 7, 57),
- einem Mischbehälter (1), der mit den Mitteln (25, 26, 27) zur dosierten Entnahme verbunden ist,
- einem Mittel (21) zur kontinuierlichen dosierten Entnahme eines konstanten Volumens aus dem Mischbehälter (1) und Zuführung in den Produktstrom,
- Mittel (48, 49, 58, 59) zur Erfassung aktueller Filtrationsdaten,
- einer elektronischen Steuereinheit (20), die mit den Mitteln (48, 49, 58, 59) zur Erfassung der Filtrationsdaten und mit den Mitteln (21, 25, 26, 27) zur dosierten Entnahme verbunden ist.

8. Vorrichtung nach Anspruch 6 oder 7,
**dadurch gekennzeichnet, daß** mindestens zwei, vorzugsweise drei Vorratsbehälter (5, 6, 7, 57) vorgesehen sind.

9. Vorrichtung nach Anspruch 8,
**dadurch gekennzeichnet, daß** als Vorratsbehälter Silos, Container und/oder Tanks vorgesehen sind.

10. Vorrichtung nach Anspruch 8,
**dadurch gekennzeichnet, daß** als Vorratsbehälter (5, 6, 7, 57) Big Bags vorgesehen sind, die an einer Aufhängevorrichtung (10) gehalten und mit ihrem offenen Ende in einer Behälteraufnahme (15, 16, 17, 56) aufgenommen sind.

11. Vorrichtung nach einem der Ansprüche 6 bis 10,
**dadurch gekennzeichnet, daß** als Mittel zur dosierten Entnahme aus den Vorratsbehältern (5, 6, 7, 57) jeweils eine gesteuerte Förderschnecke (25, 26, 27) vorgesehen ist.

12. Vorrichtung nach Anspruch 11,
**dadurch gekennzeichnet, daß** die Förderschnecken (25, 26, 27) über Zuführleitungen (52) mit dem Mischbehälter (1) oder dem Suspensionsbehälter (28) verbunden sind.

13. Vorrichtung nach Anspruch 7,
**dadurch gekennzeichnet, daß** in dem Mischbehälter (1) ein Rührwerk (2) angeordnet ist, das mit einem vorzugsweise steuerbaren Antriebsmotor (3) gekoppelt ist.

14. Vorrichtung nach Anspruch 6,
**dadurch gekennzeichnet, daß** in dem Behälter (28) ein Rührwerk (29) mit einem außerhalb des Behälters (28) angeordeten Rührwerksmotor (30) vorgesehen ist.

15. Vorrichtung nach Anspruch 13,
**dadurch gekennzeichnet, daß** an dem Mischbehälter (1) ein Fördergerät (21) angeordnet ist und eine sich daran anschließende Mischeraustragsleitung (53) in eine das Unfiltrat führende Produktleitung (23) mündet und mit einem Rückschlagventil (54) versehen ist.

16. Vorrichtung nach Anspruch 6,
**dadurch gekennzeichnet, daß** der Behälter (28) mit einem Sensor (40) für den maximalen Füllstand und einem Sensor (41) für das minimale Volumen versehen ist.

17. Vorrichtung nach einem der Ansprüche 6 14 oder 16,
**dadurch gekennzeichnet, daß** abströmseitig des Behälters (28) eine Suspensionsleitung (43) mit mindestens einem steuerbaren Ventil (45) und/oder einer drehzahlgeregelten Pumpe (44) vorgesehen ist.

18. Vorrichtung nach Anspruch 17,
**dadurch gekennzeichnet, daß** in einer Zweigleitung (662) eine weitere Pumpe (60) angeordnet ist.

## Claims

1. Method of delivering filtering aids and/or process materials during filtration, comprising the following methods steps:
- measuring filtration data on a filter or of a product flow upstream and/or downstream of the filter,
- transmitting the filtration data to an electronic control unit (20),
- calculating the required quantity of the respective filtering aids and/or process materials taking account of the filtration data,
- drawing off metered quantities of dry filtering aids and/or process materials from at least one supply container (5, 6, 7, 57) on the basis of the calculated quantity,
- delivering the metered quantity of filtering aids and/or process materials into a mixing container (19) or a suspension container (28),
- mixing the filtering aids and/or process materials in the mixing container (1) or the suspension container (28),
- continuously metering the filtering aids and/or process materials out of the mixing container (1) or suspension container (28) as a dry mixture or suspension, depending on the application,
- continuously delivering the metered quantity of mixed filtering aids and/or process materials into the product flow (unfiltered material) at a constant flow rate.

2. Method as claimed in claim 1,
**characterised in that** the filtering aids and/or process materials are mixed by means of a mixing device (2) in the mixing container (1) or a mixing device (29) in the suspension container (28).

3. Method as claimed in one of claims 1 or 2,
**characterised in that** the volume of the suspension in the container (28) is kept substantially constant.

4. Method as claimed in one of claims 1 to 3,
**characterised in that** a mixture of filtering aids and/or process materials is held in readiness in a supply container and the mixture is drawn off in metered quantities and delivered dry or in suspension to a product flow (unfiltered material).

5. Method as claimed in claim 1,
**characterised in that** dry filtering aids and/or process materials are drawn off in metered quantities from several supply containers (5, 6, 7, 57).

6. Device for delivering filtering aids and/or process materials during filtration, having the following features:
- at least one supply container (5, 6, 7, 57), in which the filtering aids and/or process materials are contained,
- means (25, 26, 27) for metering the quantity drawn off from the supply containers (5, 6, 7, 57),
- a container (28) for placing the drawn off, metered filtering aids and/or process materials in suspension,
- means (52, 61) for connecting the means (25, 26, 27) metering the quantity drawn off from the suspension container (28),
- means (42, 44) for continuously drawing off a metered quantity from the container (28) at a constant flow volume of the suspension,
- means (48, 49, 58, 59) for measuring current filtration data,
- an electronic control unit (20) connected to the means (48, 49, 58, 59) for measuring the filtration data, the means (25, 26, 27) for metering the quantity drawn off from the supply containers (5, 6, 7, 57) and the means (42, 44) for metering the quantity drawn off from the container (28).

7. Device for delivering filtering aids and/or process materials during filtration, having the following features:
- at least one supply container (5, 6, 7, 57), in which the filtering aids and/or process materials are contained,
- means (25, 26, 27) for metering the quantity drawn off from the at least one supply container (5, 6, 7, 57),
- a mixing container (1) connected to the means (25, 26, 27) for metering the quantity drawn off,
- a means (21) for continuously drawing off a metered quantity at a constant flow volume from the mixing container (1) and delivering it to the flow product,
- means (48, 49, 58, 59) for measuring current filtration data,
- an electronic control unit (20) connected to the means (48, 49, 58, 59) for measuring the filtration data and the means (21, 25, 26, 27) for metering the quantity drawn off.

8. Device as claimed in claim 6 or 7,
**characterised in that** at least two, preferably three supply containers (5, 6, 7, 57) are provided.

9. Device as claimed in claim 8,
**characterised in that** silos, containers and/or tanks are used as supply containers.

10. Device as claimed in claim 8,
**characterised in that** big bags are provided as supply containers (5, 6, 7, 57), which are retained on a hanging device (10) and held in a container holder (15, 16, 17, 56) by their open end.

11. Device as claimed in one of claims 6 to 10,
**characterised in that** a respective controlled conveyor screw (25, 26, 27) is used as the means for metering the quantity drawn off from the supply containers (5, 6, 7, 57).

12. Device as claimed in claim 11,
**characterised in that** the conveyer screws (25, 26, 27) are connected to the mixing container (1) or the suspension container (28) by delivery lines (52).

13. Device as claimed in claim 7,
**characterised in that** an agitator (2) is provided in the mixing container (1) and is coupled with a preferably controllable drive motor (3).

14. Device as claimed in claim 6,
**characterised in that** an agitator (29) in the container (28) is provided with an agitator motor (30) disposed externally to the container (28).

15. Device as claimed in claim 13,
**characterised in that** a conveyor device (21) is provided on the mixing container (1) and a mixer discharge line (53) connecting therewith opens into a product line (23) carrying the unfiltered material and is fitted with a check valve (54).

16. Device as claimed in claim 6,
**characterised in that** the container (28) is provided with a sensor (40) for detecting the maximum level and a sensor (41) for detecting the minimum volume.

17. Device as claimed in one of claims 6, 14 or 16,
**characterised in that** a suspension line (43) with at least one controllable valve (45) and/or a speed-regulated pump (44) is provided on the downstream side of the container (28).

18. Device as claimed in claim 17,
**characterised in that** an additional pump (60) is provided in a branch line (62).

## Revendications

1. Procédé pour amener des agents auxiliaires de filtration et/ou des substances auxiliaires techniques, pendant la filtration, présentant les étapes de procédé suivantes :
- relevé de données de filtration au niveau d'un filtre ou à partir d'un écoulement de produit avant et/ou après le filtre,
- transfert des données de filtration à une unité de commande électronique (20),
- calcul de la quantité nécessaire des agents auxiliaires de filtration respectifs et/ou des substances auxiliaires techniques respectives en prenant en considération les données de filtration,
- prélèvement dosé d'agents auxiliaires de filtration secs et/ou de substances auxiliaires techniques sèches dans au moins un réservoir de réserve (5, 6, 7, 57) sur la base de la quantité calculée,
- amenée de la quantité dosée d'agents auxiliaires de filtration et/ou de substances auxiliaires techniques dans un réservoir de mélange (19) ou un réservoir de suspension (28),
- mélange des agents auxiliaires de filtration et/ou des substances auxiliaires techniques dans le réservoir de mélange (1) ou le réservoir de suspension (28),
- prélèvement dosé continu des agents auxiliaires de filtration et/ou des substances auxiliaires techniques, suivant l'utilisation, en tant que mélange sec ou suspension à partir du réservoir de mélange (1) ou du réservoir de suspension (28),
- amenée continue dans l'écoulement de produit (non filtré) de la quantité dosée d'agents auxiliaires de filtration et/ou de substances auxiliaires techniques ayant été mélangés, avec un débit volumique restant uniforme.

2. Procédé selon la revendication 1, **caractérisé en ce que** le mélange des agents auxiliaires de filtration et/ou des substances auxiliaires techniques est effectué par un dispositif mélangeur (2) dans le réservoir de mélange (1) ou un dispositif mélangeur (29) dans le réservoir de suspension (28).

3. Procédé selon l'une des revendications 1 ou 2, **caractérisé en ce que** le volume de la suspension dans le réservoir (28) est maintenu sensiblement constant.

4. Procédé selon l'une des revendications 1 à 3, **caractérisé en ce que** l'on maintient disponible dans un réservoir de réserve, un mélange d'agents auxiliaires de filtration et/ou de substances auxiliaires techniques, et en que l'on effectue un prélèvement dosé du mélange et une amenée sèche ou en suspension à un écoulement de produit (non filtré).

5. Procédé selon la revendication 1, **caractérisé en ce que** l'on effectue un prélèvement dosé d'agents auxiliaires de filtration secs et/ou de substances auxiliaires techniques sèches à partir de plusieurs réservoirs de réserve (5, 6, 7, 57).

6. Dispositif pour amener des agents auxiliaires de filtration et/ou des substances auxiliaires techniques, pendant la filtration, présentant les caractéristiques suivantes :
- au moins un réservoir de réserve (5, 6, 7, 57) qui contient les agents auxiliaires de filtration et/ou les substances auxiliaires techniques,
- des moyens (25, 26, 27) pour le prélèvement dosé à partir des réservoirs de réserve (5, 6, 7, 57),
- un réservoir (28) pour la mise en suspension des agents auxiliaires de filtration et/ou des substances auxiliaires techniques prélevés de manière dosée,
- des moyens (52, 61) pour relier les moyens (25, 26, 27) pour le prélèvement dosé, au réservoir de suspension (28),
- des moyens (42, 44) pour le prélèvement dosé continu d'un débit volumique uniforme de la suspension à partir du réservoir (28),
- des moyens (48, 49, 58, 59) pour relever des données de filtration actuelles (réelles),
- une unité de commande électronique (20), qui est reliée aux moyens (48, 49, 58, 59) destinés à relever les données de filtration, aux moyens (25, 26, 27) pour le prélèvement dosé à partir de réservoirs de réserve (5, 6, 7, 57), et aux moyens (42, 44) pour le prélèvement dosé à partir du réservoir (28).

7. Dispositif pour amener des agents auxiliaires de filtration et/ou des substances auxiliaires techniques, pendant la filtration, présentant les caractéristiques suivantes :
- au moins un réservoir de réserve (5, 6, 7, 57) qui contient les agents auxiliaires de filtration et/ou les substances auxiliaires techniques,
- des moyens (25, 26, 27) pour le prélèvement dosé à partir dudit au moins un réservoir de réserve (5, 6, 7, 57),
- un réservoir de mélange (1) qui est relié aux moyens (25, 26, 27) pour le prélèvement dosé,
- un moyen (21) pour le prélèvement dosé continu d'un volume constant à partir du réservoir de mélange (1), et l'amenée dans l'écouleme de produit,
- des moyens (48, 49, 58, 59) pour relever des données de filtration actuelles (réelles),
- une unité de commande électronique (20), qui est reliée aux moyens (48, 49, 58, 59) destinés à relever les données de filtration, et aux moyens (21, 25, 26, 27) pour le prélèvement dosé.

8. Dispositif selon la revendication 6 ou 7, **caractérisé en ce que** sont prévus au moins deux et de préférence trois réservoirs de réserve (5, 6, 7, 57).

9. Dispositif selon la revendication 8, **caractérisé en ce qu'**en guise de réservoirs de réserve sont prévus des silos, des conteneurs et/ou des citernes.

10. Dispositif selon la revendication 8, **caractérisé en ce qu'**en guise de réservoirs de réserve (5, 6, 7, 57) sont prévus des réservoirs dits Big Bags, qui sont accrochés à un dispositif de suspension (10) et reçus par leur extrémité ouverte, dans un logement de réception de réservoir (15, 16, 17, 56).

11. Dispositif selon l'une des revendications 6 à 10, **caractérisé en ce qu'**en guise de moyen pour le prélèvement dosé à partir des réservoirs de réserve (5, 6, 7, 57), il est prévu respectivement une vis transporteuse sans fin (25, 26, 27) pouvant être commandée.

12. Dispositif selon la revendication 11, **caractérisé en ce que** les vis transporteuses sans fin (25, 26, 27) sont reliées au réservoir de mélange (1) ou au réservoir de suspension (28), par l'intermédiaire de conduites d'amenée (52).

13. Dispositif selon la revendication 7, **caractérisé en ce que** dans le réservoir de mélange (1) est disposé un agitateur (2) qui est couplé à un moteur d'entraînement (3) pouvant de préférence être commandé.

14. Dispositif selon la revendication 6, **caractérisé en ce que** dans le réservoir (28) est prévu un agitateur (29) avec un moteur d'agitateur (30) disposé à l'extérieur du réservoir (28).

15. Dispositif selon la revendication 13, **caractérisé en ce que** sur le réservoir de mélange (1) est disposé un appareil de transport (21), et une conduite de sortie de mélangeur (53), qui s'y raccorde, débouche dans une conduite de produit (23) véhiculant le produit non filtré, et est pourvue d'un clapet anti-retour (54).

16. Dispositif selon la revendication 6, **caractérisé en ce que** le réservoir (28) est pourvu d'un détecteur (40) pour le niveau de remplissage maximal, et d'un détecteur (41) pour le volume minimal.

17. Dispositif selon l'une des revendications 6, 14 ou 16, **caractérisé en ce que** du côté de la sortie d'écoulement du réservoir (28), est prévue une conduite de suspension (43) avec au moins une vanne (45) pouvant être commandée, et/ou une pompe (44) régulée en vitesse de rotation.

18. Dispositif selon la revendication 17, **caractérisé en ce que** dans une conduite en dérivation (62) est disposée une autre pompe (60).
